# EUROPEAN PATENT SPECIFICATION

(11) **EP 2 861 431 B1**
(45) Date of publication and mention of the grant of the patent: **28.09.2016**
(21) Application number: 13731961.2
(22) Date of filing: 22.05.2013
(51) Int. Cl.: B44C 5/00, C03C 27/00, G09F 3/00

(54) **METHOD FOR APPLYING DECORATIVE ELEMENTS ON CURVED SURFACES**
VERFAHREN ZUM APPLIZIEREN VON DEKORATIVEN ELEMENTEN AUF GEBOGENE OBERFLÄCHEN
PROCÉDÉ D'APPLICATION D'ÉLÉMENTS DÉCORATIFS SUR DES SURFACES COURBÉES

(30) Priority: 18.06.2012 IT RM20120282
(43) Date of publication of application: 22.04.2015
(73) Proprietor: Luxury IP Holding Limited, Dublin 2 (IE)
(72) Inventor: DI BATTISTA, Davide, 00191 Roma (RM) (IT)
(74) Representative: Hally, Anna-Louise
(86) International application number: PCT/IB2013/054228
(87) International publication number: WO 2013/190404

(56) References cited:
- AT-A4- 505 288
- DE-B1- 2 901 728
- GB-A- 2 467 365
- US-A- 5 167 743
- US-A1- 2005 076 998

## Description

### Field of the art

The present invention refers to a new method for applying rhinestones and/or precious stones and/or decorative elements in general on curved surfaces. In particular, the present invention refers to a new method, which provides for first applying the rhinestones to a fabric and subsequently applying the latter in a conformation perfectly spread on curved surfaces, like those characteristic of glass bottles suitable for containing drinks. The result of this method allows obtaining decorations free of irregularities and stably fixed in an indirect manner on a curved surface.

### State of the art

Methods for applying decorative elements on rigid surfaces such as those made of glass have been known for many years. For instance let's consider all ornamental structures such as containers of accessories, jewels, bath salts and objects in general, which on the outer surface thereof, i.e. on the externally visible surface of the container, have decorative elements such as rhinestones and/or precious stones. Usually, these decorative elements are assembled to said object containers by means of methods that vary depending on the type of element intended to be used to decorate the ornamental object and depending on the surface of the latter. When the surface in question is a rigid and smooth surface like a glass and/or metallic surface, the assembly of said decorative elements to the surface is rather complex. Indeed, in some cases the assembly of the decorative element to the sublayer made of glass and/or metal occurs by means of setting, thus making the object itself difficult to attain. The decoration of the object in this case requires not only the use of a specific instrumentation, but also requires precision and accuracy by the operator, given that this procedure is hard to attain at the industrial level and it is usually executed manually. The alternative to the setting of decorative elements on rigid surfaces is represented by the gluing of said decorative elements on the surface in question. The latter technique is that which is more widely employed today for attaining ornamental objects, not only because the costs relative to the actuation thereof are relatively low, not involving the use of sophisticated equipment, but also because it is practical both on an industrial level, by means of the use of automated machinery, and on the manual level by any one artisan who has the basic tools and elements for constructing the ornamental object. Nevertheless, the limit of this method lies in the efficiency of the gluing itself. More in detail, this procedure, though easy to actuate, does not always ensure a stable and durable gluing of the ornamental element on the surface on which said element is glued. This characteristic is generally due to the fact that the chemical interactions that are established between the glue and the surface in question are not sufficiently strong and constantly stable over time to resist possible mechanical stresses and wear of the ornamental object. These drawbacks are also encountered, although to a slightly lower extent, when the sublayer on which it is desired to glue the decorative element is a fabric. In addition, the actuation of this method requires, both when the sublayer is a rigid material such as glass and/or metal and when the sublayer is a fabric, an accurate selection of the glue material and the completion of several steps before the gluing of the decorative element on the surface. In particular, for a correct gluing of a decorative element such as a rhinestone, the selection of the glue is of critical importance; such glue also varies depending on the type of material on which it is intended to apply the rhinestones.

For example, epoxy or methacrylic glues which have a very low volumetric shrinkage coefficient and which give rise, after desiccation, to a colorless, high-strength welding are particularly suitable. Acetone-based and acetic acid stabilized water dispersion glues, which develop excessive pressure on the glued parts due to the high volumetric shrinkage coefficient during desiccation, are instead particularly unsuitable. This involves damaging the protective varnish, which is usually present on the lower part of the stone, causing a consequent possible separation of the vitreous mass from the reflecting layer. A further aspect that has considerable importance in the actuation of the gluing procedure regards the handling of the rhinestones and in particular the handling of the lower part thereof. More in detail, it is very important to avoid direct contact of the hands with said lower parts of the rhinestones so as to prevent dirtying the rhinestones at those points in which the glue is applied, risking the obtainment of a non-uniform gluing due to impurities present on the lower layer of the rhinestones.

For this reason, when executing this technique it is first necessary to remove the following from the surface of the stone or rhinestone to be glued: all solid particles, possible traces of corrosion, layers of preservatives, finger impressions and impurities of various kinds coming from the work environment. This step of cleaning before gluing must also be executed on the surface of the sublayer on which the stone or decorative element is subsequently glued. This operation is generally called degreasing and consists of removing all the impurities present from the surface, by means of the use of suitable organic degreasers like acetone and isopropyl alcohol.

In addition, in order to obtain good gluing it is preferable to use, in the case of "rigid" bases as sublayers, materials such as galvanized noble metals, ceramic materials, glass, varnished materials, hard wood etc., and in the case of fabrics, various types of fabrics and non-woven fabrics can be employed.

As stated above, the application of a decorative element such as a rhinestone on a sublayer represented by a fabric by means of gluing is generally more effective than that relative to an analogous rhinestone on a rigid surface such as a metal or glass. In particular, the greater effectiveness of the method on a fabric is verified when the rigid surface in question is not a flat surface but rather a curved surface, or a surface that has flat and curved sections at which it is desired and/or necessary to apply one or more rhinestones. Whereas a fabric can indeed be adapted to the surface of the rhinestones on which the glue is placed, assuming various conformations, a curved rigid surface as it is cannot always be perfectly adapted to the adhesive surface of the rhinestones.

The perfect adaptation condition is encountered for example in the case of two rigid and flat surfaces perfectly adherent to each other. In the case in which one surface is flat, such as the lower surface of a rhinestone to be glued on a sublayer, and the other surface is curved, as in the case of a sublayer that has curves such as a common bottle for drinks, the adhesion is instead incomplete. In particular in the latter described condition, not all the points of the rhinestone surface are in contact with the points of the surface of the sublayer involved in the gluing. Moreover, even if an effective glue is provided to make up for this characteristic, the gluing will still have "weak" points, or points wherein the separation of the rhinestones from the sublayer is more likely.

For this reason, a recently employed technique provides for previously applying the rhinestone, or decorative element in general, to a fabric and subsequently applying the latter (it too for example by means of gluing) on the curved surface of the sublayer that one wishes to decorate. One such method is disclosed in GB-A-2 467 365 in which decorative items are applied to a textile substrate. GB-A-2 467 365 discloses a method for applying decorative items to a textile substrate using a stencil with holes for the decorative items prior to transferring and fixing the items to the textile substrate. Nevertheless, though this technique ensures an effective gluing of the rhinestones to the fabric, it involves difficulties in correctly and precisely applying the fabric to the sublayer having curves. More in detail, the presence of said curved sections on the surface of the sublayer to be decorated makes it difficult to perfectly extend the fabric on said curved sections, with the result that there occurs the inevitable formation of unaesthetic folds on the fabric itself. The latter characteristic leads to the formation of irregular decorations on the finished ornamental product.

For such purpose, the present industrial invention patent application, which will be described in detail hereinbelow, proposes a new method for the stable, precise and regular application of decorative elements on a fabric, to be glued in a conformation perfectly spread on a rigid surface having curves like the surface of a common bottle for drinks.

### Description of the invention

The present invention describes a new and innovative method for applying decorative elements such as precious stones and/or rhinestones on partially and/or totally curved surfaces. More in detail, the method according to the present invention allows adorning and/or decorating a surface having curved sections, like the surface of a common bottle for alcoholic drinks, by applying a fabric that has been previously decorated on said surface, preferably decorated with rhinestones, in a conformation perfectly spread on said curved surface. Still more in detail, the present invention describes a method for applying decorative elements on curved surfaces in which said decorative elements are first glued to a fabric that is preformed in a manner such that it can be spread and glued on the curved surface of the object to be decorated in a perfectly spread conformation, in a manner so as to avoid having any folds when applied on the surface in question. The main advantage offered by the method for applying decorative elements on curved surfaces is that of being able to stably fix, with extreme accuracy and precision, decorative elements like rhinestones on any object having curved and rigid surfaces (like a bottle). The application of the rhinestones on the rigid and curved surface occurs, as stated above, in an indirect manner since the rhinestones are first applied on the fabric and then the latter is applied to the surface. A fundamental characteristic of the described invention is represented by the form of the used fabric, which is such to prevent the formation of folds on the applied fabric itself when the fabric is spread and applied (e.g. by means of gluing) on the surface of an object like a bottle. The absence of said folds, which would also be unaesthetic, allows representing the decorative writing or image in a perfectly precise and regular manner. A further advantage offered by the present industrial invention patent application occurs in the industrial utility of the present method. In particular, the method for applying decorative elements on curved surfaces according to the present invention allows attaining, in an automated manner, the aforesaid ornamental objects, i.e. objects having rhinestones as decorations that were previously applied on fabric. In one of its final steps, the method indeed provides for applying a decorated fabric to a rigid surface, and not for applying decorative elements directly on said curved and rigid surface. The latter condition is in fact hard to attain on the industrial level and requires extreme accuracy and manual precision.

The method for the application of decorative elements on curved and rigid surfaces comprises several steps. More in detail, a first step consists of attaining, by means of the use of a socket punch, an industrial template representing the form of the decorative writing and/or image that it is desired to represent on the rigid object with curved surfaces. The obtained template must also have a thickness and holes with size analogous to those of the decorative elements used. The second step of the present method consists of the random spreading of a plurality of decorative elements and preferably rhinestones on the template. This operation causes the insertion of the rhinestones into the holes present on the template in a manner so as to cover the entire represented image and/or writing. The excess rhinestones present on the surface of the template are subsequently removed by using a common spatula.

The third step of the method described in the present document provides for applying an adhesive film having an adhesive layer to be applied on the template. The application occurs in an extremely precise manner due to guide points present both on the template and on the adhesive film. The function of this operation is to make the adhesive layer of the film adhere on all the rhinestones forming the decoration. The subsequent removal of the adhesive film from the template will consequently allow "collecting" and extracting from the template all the rhinestones forming the design and maintaining the selected configuration.

The subsequent step provides for the application of the adhesive film having the rhinestones on the preformed fabric, which will in the end be applied on the bottle. This operation thus allows transferring the decoration from the film to the fabric. The transfer is ensured since each decorative element, and more in detail each rhinestone has a glue layer on the lower surface thereof that is adapted to be applied on the fabric. The chemical interaction that is established between the glue layer present on the lower part of the rhinestones and the fabric is also stronger than that pre-existing between the rhinestones and the adhesive film, so that removing the film, having the rhinestones, from the fabric ensures that all the rhinestones are glued on the latter. Also in this case, the application of the adhesive film having the rhinestones, to the fabric, occurs in a precise manner by using guide points present both on the adhesive layer of the film and on the surface of the pre-formed fabric to be decorated. In order to obtain an effective gluing of the rhinestones on the fabric, in a subsequent step of the described method, the fabric having the rhinestone decoration is subjected to a warming press treatment. This treatment allows simultaneously compressing the rhinestones on the fabric, and heating the glue contributing to the fixing of the rhinestones on the fabric. The pressure exerted during this step of the method described herein is not necessarily constant, but varies according to the size of the rhinestones glued on the fabric. In particular, rhinestones with small size are subjected to a greater pressure than that applied to the larger-size rhinestones. Hence, if the decorated fabric has both rhinestones with relatively small size and rhinestones with relatively large size, the entire fabric having the set of rhinestones will be compressed and heated by applying a relatively large pressure thereon, adapted to fix the rhinestones with small size, and then lower pressure for the gluing of the greater size elements.

The fabric thus obtained has a decoration of rhinestones stably fixed by means of gluing on the surface thereof. In order to apply the decorated fabric on the rigid and curved surface like the surface of a bottle, the method according to the present invention provides for using a layer of double-adhesive material having two adhesive surfaces. One of these surfaces is adapted to be glued to the fabric having the decoration, while the other is adapted for applying the double-adhesive back fabric to the curved and rigid surface and in particular to the bottle to be decorated. The application of the layer of double-adhesive material to the fabric is executed before the decoration of the fabric, i.e. upstream of the above-described steps. As stated above, the form of the decorated fabric and double-adhesive back is of critical importance in the entire described method. The form was designed in relation to the type of sublayer on which said fabric will be applied, which in the case of the embodiments reported in this description is a common bottle for drinks, and is such to ensure the perfect extension of the fabric on the surface in question.

The final step of the described method provides for the removal of a film present on the adhesive layer placed on the back of the decorated fabric and the application of the latter on the surface of the bottle. This application occurs with a technology of known type, analogous to that used for the application of labels on the body of many bottles suitable for containing drinks.

The ornamental objects decorated with this method, in addition to being easy to attain, also certainly have a high added value from an aesthetic standpoint. By virtue of this characteristic, glass bottles adapted for containing drinks, decorated with the aforesaid method, can be used for celebrating particular events and/or for celebrating an anniversary. In addition, the form of the decorated fabric and the label applied to the bottle is such to allow not only its decoration with applied elements, but also to allow sufficient space for showing on the object, specifically on the bottle, all the indications that are usually shown, such as the company producing the product and its characteristics.

### BRIEF DESCRIPTION OF THE DRAWINGS

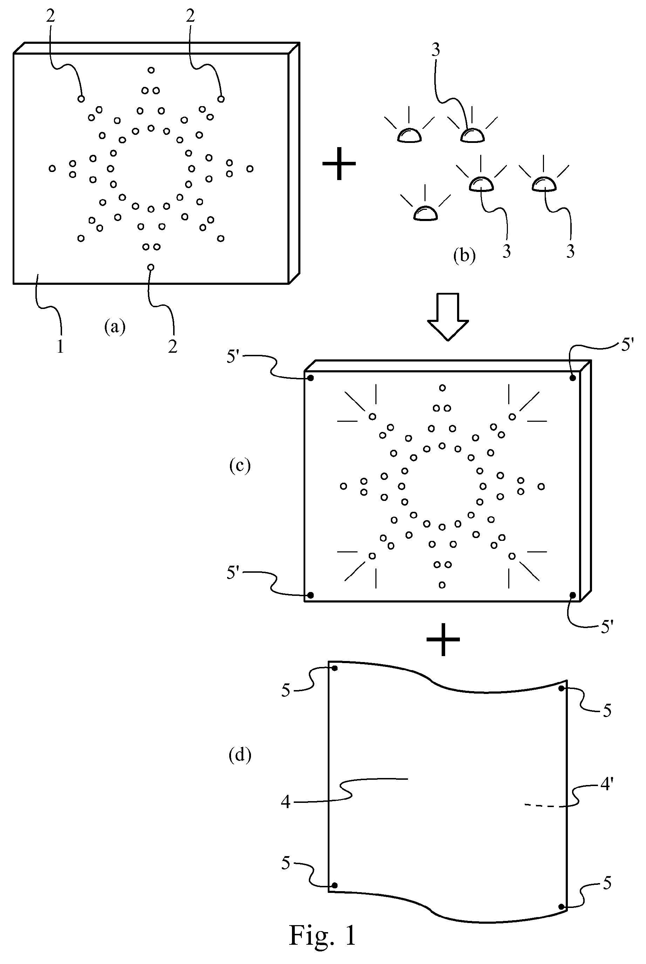

FIGURE 1(a) shows a perspective view of the template 1 having a plurality of holes 2 forming a drawing in their entirety, and in particular a drawing representing the sun. Fig. 1(b) instead shows a plurality of decorative elements 3 adapted to be inserted inside the holes 2 present on the template 1. Fig. 1(c) shows the template 1 in which all the holes 2 present thereon are occupied by decorative elements 3 and in particular by rhinestones. In the figure, a plurality of guide points 5' present on the surface of the template 1 can also be observed. Fig. 1(d) shows the film 4 having the adhesive layer 4' adapted to be perfectly and matingly applied with the template 1, in order to receive from said template 1 all the decorative elements 3 maintaining the configuration thereof, i.e. maintaining the form of the design present on the template 1. Said application occurs in a precise manner due to the presence of guide points 5 present on the adhesive layer 4' of the film 4 and guide points 5' present on the surface of the template 1.

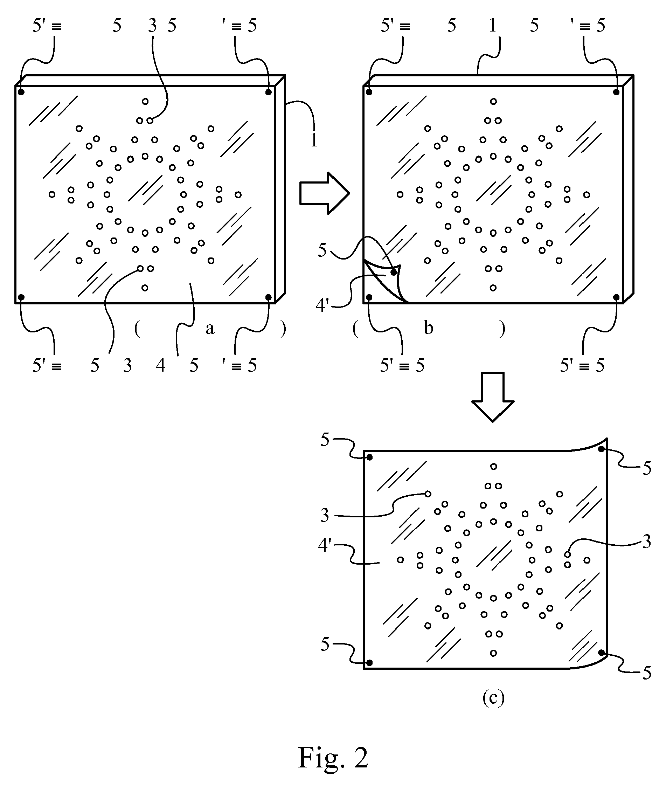

FIGURE 2 shows the various steps pertaining to the application of the film 4 on the template 1 in order to gather all the decorative elements 3 forming the drawing representing the sun. More in detail, Fig. 2 (a) shows the template 1 on which the plurality of holes 2 forming the drawing representing the sun is present the holes being occupied by a respective plurality of decorative elements 3. On the template 1, the film 4 is also precisely applied by means of the guide points 5' present on the template 1 coinciding with the guide points 5 present on the film 4. Fig. 2(b) shows the removal of the film 4 from the template 1 having all the components described in the preceding Fig. 2(a). Observable in the figure is the adhesive layer 4' of the film 4, which is removed from the template 1. Fig. 2(c) shows the film 4 removed from the template 1 and having on the adhesive layer 4' thereof all the decorative elements 3 forming the drawing representing the sun.

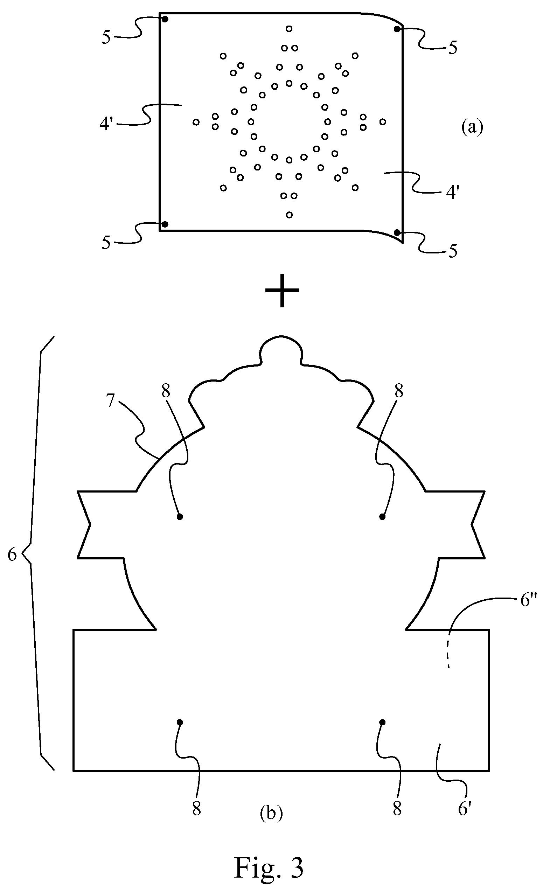

FIGURE 3 shows the step of the method according to the present invention pertaining to the application of the film 4 on the fabric 6, in order to transfer all the decorative elements 3 from the film to the fabric 6. More in detail, Fig. 3(a) is analogous to the above-described Fig. 2(c) and Fig. 3(b) shows the fabric 6 on which said decorative elements 3 are applied. Said fabric 6 has a front surface 6' adapted to receive the set of decorative elements 3 forming the drawing representing the sun and a rear surface 6" adapted to be applied, by means of a double-adhesive layer 11 (not shown in the figure), to the curved surface of the object to be decorated 100. Said fabric 6 also has a particular form 7 adapted to allow the perfect extension of the fabric 6 on the curved and rigid surface of the object to be decorated 100. The figure also shows the presence of a plurality of guide points 8 present on the front surface 6' of the fabric 6. Said guide points 8 are adapted to mate with the corresponding guide points 5 present on the adhesive layer 4' of the film 4 in order to ensure a correct and precise transfer of the decorative elements 3 forming the writing and/or the design, in this case the drawing representing the sun, on the fabric 6.

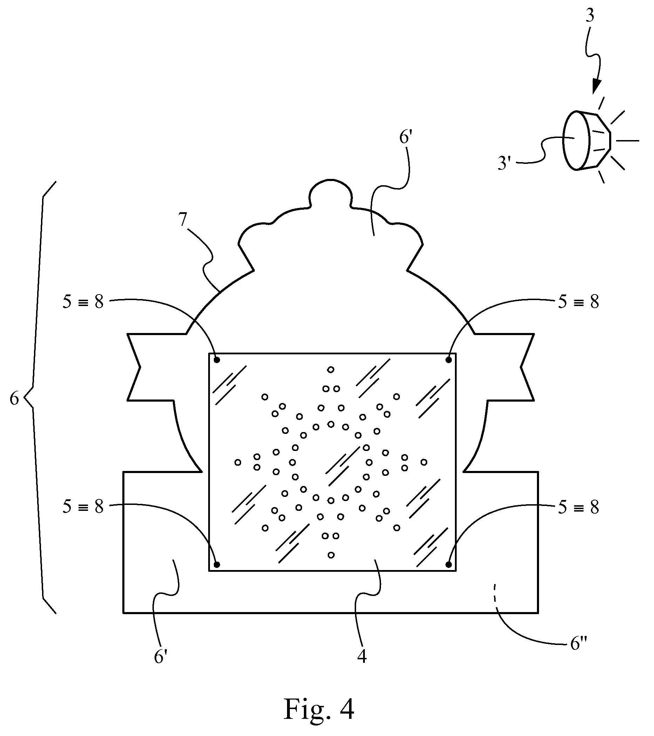

FIGURE 4 shows a front view of the fabric 6 on which the film 4 was applied, by mating the guide points 5 present on the adhesive layer 4' thereof with corresponding guide points 8 present on the front surface 6' of the fabric 6. The figure also shows a decorative element 3 in detail, in particular a rhinestone. Shown in the figure is the rear surface 3' of the decorative element 3. Said rear surface 3' has a glue layer adapted to facilitate the application and the fixing of each decorative element 3 on the front surface 6' of the fabric 6.

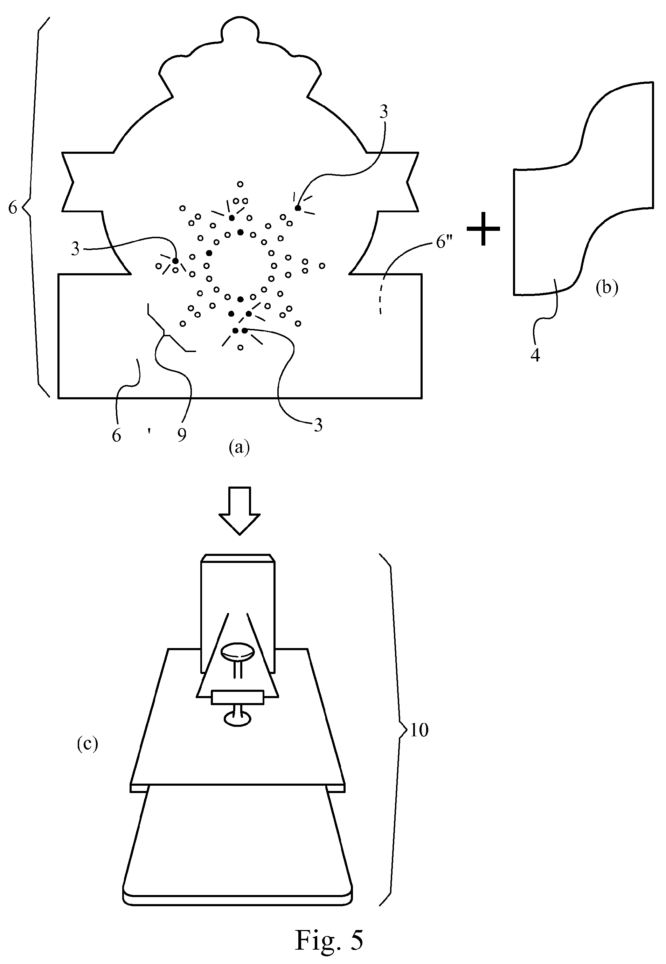

FIGURE 5 shows the step of the method according to the present invention pertaining to the effect fixing of the decorative elements 3 on the surface 6' of the fabric 6 in order to form a decoration 9 on said fabric 6.
   More in detail, Fig. 5(a) shows the fabric 6 after removing the film 4. In particular, the figure shows a front view of the front surface 6' of the fabric 6 on which the drawing representing the sun formed by a plurality of decorative elements 3 is observable. Fig. 5(b) is a perspective view of the film 4 removed from the fabric 6 and Fig. 5(c) is a perspective view of a thermal press 10 adapted to subject the fabric 6 having the decorative elements 3 to a pressure that is a function of the size of said decorative elements 3 and to heating in order to heat the glue and contribute to fixing the design on the fabric 6.

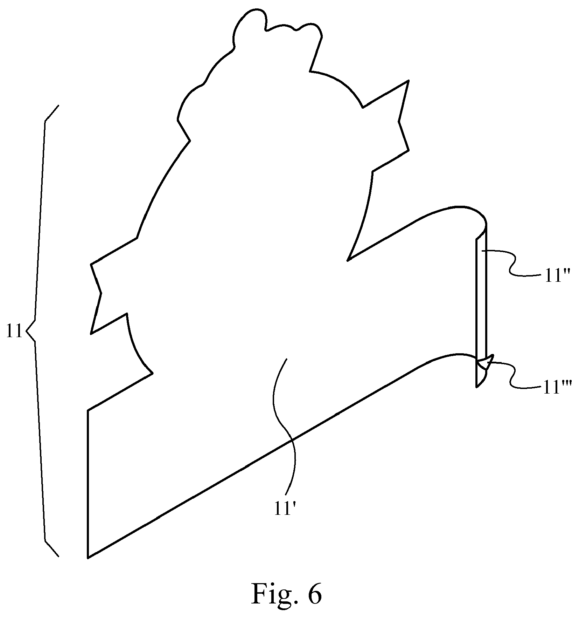

FIGURE 6 shows a perspective view of the double-adhesive layer 11 adapted to be applied upstream of the entire method according to the present invention, on the rear surface 6" of the fabric 6. More in detail the figure shows that the double-adhesive layer 11 has a front adhesive layer 11' adapted to be applied to the rear surface 6" of the fabric 6 and a rear adhesive layer 11" adapted to be applied on the curved and rigid surface of the object to be decorated 100. The application of said rear adhesive layer 11" to the curved surface of the object to be decorated 100 occurs by removing a protective film 11'" present on said rear adhesive layer 11".

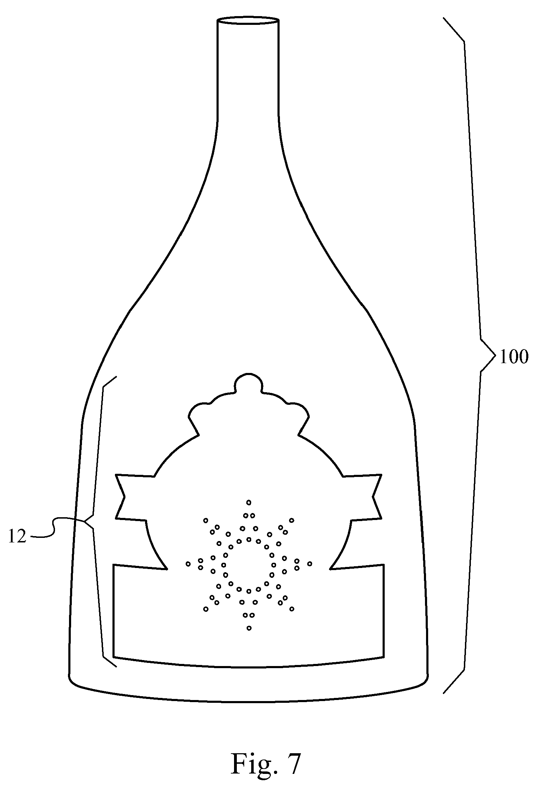

FIGURE 7 shows a front view of the object to be decorated 100, which in the case of the present description is a bottle for drinks, on which the label 12 obtained with the method according to the present invention is applied. Said label 12 comprises elements like the fabric 6 described in the previous figures, the decoration 9 which in the case of the figure in question is a sun, and a double-adhesive layer 11 that is placed on the back of the label and that is described in detail in the preceding figure.

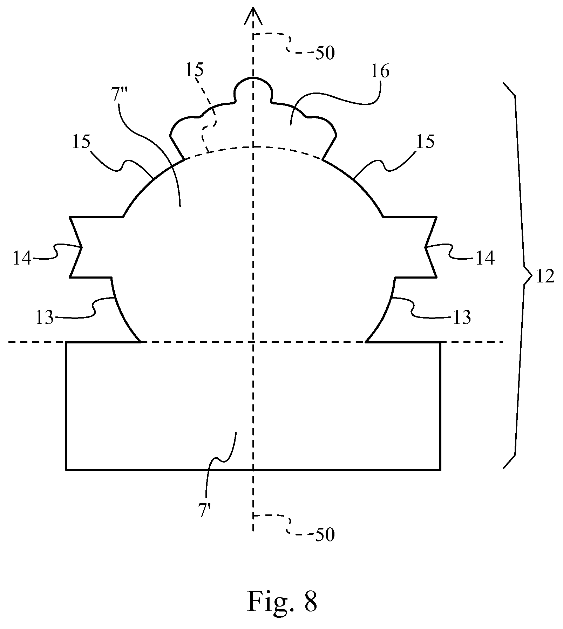

FIGURE 8 shows a front view of the label 12 and shows the characteristics of its particular form 7. More in detail, the figure shows that said form 7 of the label 12 has two portions; a lower portion 7' having a rectangular portion, and an upper portion 7" with elliptical form. The entire form 7 is also symmetric with respect to a vertical symmetry axis 50. The lower portion 7' and the upper portion 7" also respectively have the larger sides of the rectangle characterizing said lower portion 7', and the larger axis of the ellipse characterizing said upper portion 7", parallel with respect to the ground level. The present form 7 also has two lateral projections 14 shaped as a dovetail and symmetric with respect to said vertical symmetry axis 50, and a projection 16 shaped as a royal crown, which is spread on the top part of the central zone of the greater upper arc 15 of the ellipse. Said form 7 is also such that the extension of the upper portion 7" on the lower portion 7' forms recesses 13, also symmetric with respect to the vertical symmetry axis 50.

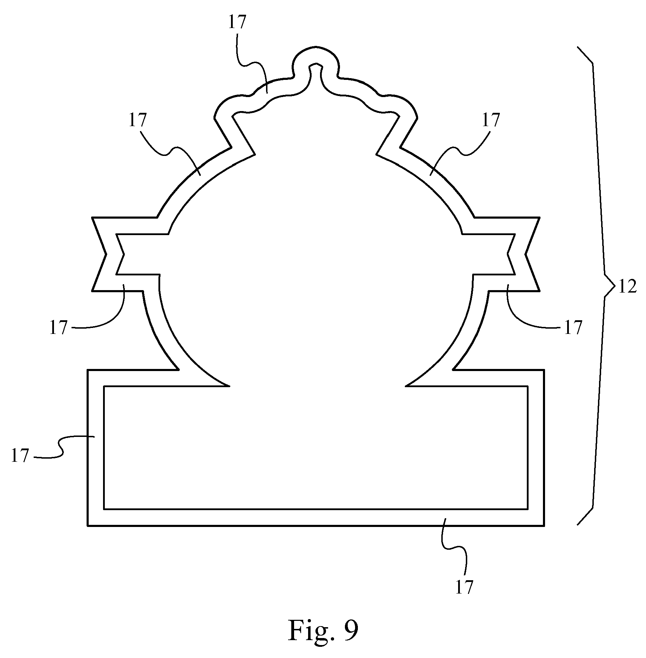

FIGURE 9 shows particular embodiment of the label 12 obtained with the method according to the present invention in which said label 12 is analogous to the label 12 described in the preceding figures but it is internally hollow and has edges 17 of specific width adapted to receive a specific decoration 9.

### Description of the embodiments

The method for applying decorative elements on rigid and curved surfaces according to the present invention provides for the application of decorative elements, such as rhinestones, in an indirect manner to the object to be decorated, which in the present description is a common bottle for drinks.

The application occurs in an indirect manner since the rhinestones are first applied on a fabric and then the latter is applied on the bottle.

More in detail, the method for applying decorative elements on rigid and curved surfaces described herein comprises a plurality of steps:
a first step of the method provides for obtaining a template 1, as well as a mold, using for example a socket punch. The constructed template 1 has a plurality of holes 2 which - in their entirety - give rise to the form of the image and/or the writing which one wishes to represent on any object to be decorated 100 that has curved and rigid surfaces, like those of a common bottle for drinks. The template 1 also has a thickness and size of the holes 2 analogous to those of the decorative elements 3 with which it is intended to attain the writing and/or drawing and which are preferably represented by rhinestones.

The next step of the described method provides for the insertion of the decorative elements 3, i.e. rhinestones, inside the holes 2 present on the template 1. Said insertion occurs by scattering a plurality of decorative elements 3 across the template 1, in a manner such that said decorative elements 3 are inserted in each hole 2 present on the template 1. The excess decorative elements 1 are easily removed from the surface of the template 1 by using a common spatula.

Subsequently, the method according to the present invention provides for using an adhesive film 4 adapted to transfer the decorative elements 3, forming the drawing and/or the writing, on the fabric which will then be applied to the object to be decorated 100. More in detail, the film 4 has an adhesive layer 4' which then adheres on the surface of the template 1 containing the decorative elements 3.

The perfect adhesion of the film 4 and its adhesive layer 4' is ensured due to the presence of a plurality of guide points 5 and 5' respectively present on the film 4 and on the surface of the template 1. The presence of said guide points 5 and 5' allows matching the adhesive layer 4' of the film 4 in a precise manner on the surface of the template 1 in a manner so as to not create irregularities in the final decoration, i.e. in a manner such to render the design and/or the writing present on the template 1 perfectly reproducible on the object to be decorated 100. The next step consists of removing the film 4 containing the decorative elements 3 from the template 1. This operation allows collecting all the rhinestones forming the drawing and/or the writing, ensuring that the configuration given to the set of decorative elements 3 remains. In other words, due to the presence of the adhesive layer 4', all the rhinestones or decorative elements 3 that adhere to said adhesive layer 4' remain in the same configuration, i.e. in the same spatial arrangement with respect to the others.

The film 4 containing the set of decorative elements 3 forming any decoration 9 is then applied to a fabric 6 having a form 7 suitably designed to ensure that the fabric 6 is perfectly spread when suitably applied on the curved surface of an object to be decorated 100, like that of a bottle for drinks. More in detail the form 7 of fabric 6 is similar to the known form of the Contour bottle.

Also in this case, the adhesion of the film 4, containing the rhinestones, to the fabric 6 occurs in a precise manner due to the presence di guide points. More in detail, the fabric 6 has on its front surface 6', i.e. on the surface adapted to receive the decoration 9, a plurality of guide points 8 to be matched with the corresponding plurality of guide points 5 present on the adhesive layer 4' of the film 4. As stated above, this operation serves to transfer all the decorative elements 3 forming the writing and/or the drawing on the fabric 6 and more in detail on the front surface 6' of the fabric 6.

In particular the transfer of the drawing and/or writing of rhinestones from the film to the surface 6' of the fabric 6 occurs because each rhinestone and generally each decorative element 3 has a glue layer on its rear surface 3'. More in detail, each decorative element 3 has a glue layer on its rear surface 3' i.e. on the surface opposite that adhering to the layer 4' of the film 4. Said glue layer can be applied to the rhinestones, or, as in most cases, it can already be present on said rear surface 3' of each decorative element 3.

The transfer of the set of the decorative elements 3 on the front surface 6' of the fabric 6 thus occurs by means of gluing of said decorative elements 3 on the front surface 6' due to the presence of a glue layer on each rear surface 3' of each decorative element 3.

The transfer is also ensured since the chemical interaction that is established between the glue layer present on the rear surface 3' of each element 3 and the front surface 6' of the fabric 6, is stronger than the interaction that allows the adhesion of the decorative elements 3 to the adhesive layer 4' of the film 4.

The next step of the method for applying decorative elements on curved, rigid surfaces, consist of removing the film 4 from the fabric 6. The result of this operation allows obtaining a fabric 6 that has on its front surface 6' the decoration 9 that is represented by a writing and/or a drawing of decorative elements 3. In order to obtain a more effective fixing, in particular gluing, of the decorative elements on the front surface 6' of the fabric 6, a subsequent step of the described method provides for subjecting the fabric 6, having the decoration 9, to a treatment with a heating press, or with a thermal press 10. As stated above, the function of this treatment of the fabric 6 with thermal press 10 is that if efficiently gluing the decorative elements 3 on the front surface 6' of the fabric 6. This condition of efficient gluing is obtained by subjecting the fabric to a pressure whose value varies as a function of the size of the decorative elements 3. More in detail, in the case of a fabric 6 having a decoration 9 formed by decorative elements 3 of various sizes, the decorative elements 3 of relatively small size require a higher pressure than that to be applied at the decorative elements 3 of greater size.

Hence, the fabric is first subjected to a specific pressure adapted to efficiently fix all the decorative elements 3 with relatively small size and then to a lower pressure for fixing those with greater size. In order to facilitate the gluing, the fabric 6 is simultaneously subjected to heating, in a manner so as to cause the heating of the glue, consequently contributing to the gluing of the decorative elements 3 on the fabric 6.

The next step of the method according to the present invention provides for the application of the fabric 6 having the decoration 9 to the object to be decorated 100. This application occurs also in this case by means of gluing and more in detail due to the presence of a double-adhesive layer 11 placed on the rear of the fabric 6 or on the surface opposite the surface 6' on which the decoration 9 is present. Still more in detail, the fabric 6 has on its rear surface 6" i.e. on the surface adapted to be applied to the object to be decorated 100, a double-adhesive layer 11 which is applied to said fabric 6 upstream of the entire method described above. In other words, the fabric 6 is already provided, on its rear surface 6", with a double-adhesive layer 11 before the decorative elements 3 are applied on the fabric 6. The function of the double-adhesive layer 11 is that of allowing the application by means of gluing of the fabric 6 to the object to be decorated 100. Said double-adhesive layer 11 indeed has a front adhesive layer 11' to be joined with the rear surface 6" of the fabric 6, and a rear adhesive layer 11" to be joined with the surface of the object to be decorated 100. Finally, the application of the decoration 9 on the surface 6' of the fabric 6, having the double-adhesive layer 11 on its rear surface 6", gives rise to the formation of a label 12 ready to be applied both manually and in an automated manner on the surface of an object to be decorated 100. The application of the label 12 on the object to be decorated 100 occurs by means of removal of a protective film 11"' that covers the rear adhesive layer 11" of the double-adhesive layer 11.

As stated above, a fundamental characteristic of the method for applying decorative elements on curved and rigid surfaces is represented by the particular form 7 of the label 12 as well as by the form of the fabric 6. More in detail, this form 7 was suitably and accurately designed in order to allow spreading the fabric 6 as well as the label 12 in a conformation perfectly spread on the curved surface of the object to be decorated 100, which in the case of the embodiments and the figures reported in the present description is a common bottle for drinks. Said form 7, which recalls the form of the Contour bottle, is profiled in a manner so as to have two main portions or zones, and in particular a lower portion 7', which is spread on the lower part of the object to be decorated 100 i.e. on the part directed towards the bottom of the object to be decorated 100 on which the label 12 is applied, and an upper portion 7" which is extended on the upper part i.e. on the part directed towards the top of the object that one wishes to decorate. Said lower portion 7' also has a rectangular profile with the greater parallel sides directed parallel to the ground level.

Said upper portion 7" instead has an elliptical profile, with the greater axis of the ellipse also directed parallel to the ground level. Said upper portion 7", with elliptical form, is also spread centrally and in the upper zone of the lower portion 7' in a manner so as to form, with said lower portion 7', recesses 13 that are symmetric with respect to a vertical symmetry axis 50. The same form 7 is also completely symmetric with respect to said vertical symmetry axis 50. The upper portion 7" with elliptical form also has two lateral projections 14, shaped as a dovetail, and these too are symmetric with respect to the vertical symmetry axis 50. Said portion 7" additionally has, at the central zone of the greater upper arc 15 of the ellipse, a projection 16 shaped as a royal crown.

The label 12 having the aforesaid form 7, as an alternative and in a second embodiment, is such to have the internal part thereof hollow. More in detail, in a second embodiment the label 12 is only constituted by the profile of the form 7 having edges of a width sufficient for receiving a specific decoration. More in detail, in a second embodiment the form 7 of the label 12 is analogous to that described above and has edges 17 whose width varies from 3 mm to 15 mm and preferably said edges have a width of 10 mm.

This described embodiment is particularly advantageous when it is desired to apply any decoration 9 on the surface of a bottle at the curved sections, for example at the base of the bottle neck, leaving the entire space required for showing the indications pre-existing on the bottle free. In any case, the possibility of showing indications such as the manufacturer of the substance contained in the bottle, and/or the composition of the product and/or other indications, can also be obtained by using the label described in the first embodiment. Said indications can in any case be represented on the lower portion 7' of the label 12, and by applying the decoration 9 on the upper portion 7" of the label 12.

In both of the aforesaid embodiments, the decorative elements 3 are preferably represented by rhinestones having dimensions that vary from 1 mm to 10 mm and preferably from 2 mm to 5 mm.

More in detail, the decorative elements 3 are variously colored rhinestones with dimensions that vary between 1 mm and 10 mm and preferably between 2 mm and 6 mm, and said decorative elements 3 are also variously profiled, having various faceting and a variable geometry that is spherical, ellipsoidal, teardrop-shaped, polyhedral and the like.

Alternatively, the decorative elements 3 can be variously-colored paillettes.

The fabric 6 of the label 12 according to the present invention is also suitable for the application of a thermo-adhesive label thereon. More in detail, the label 12 can comprise a fabric 6 having on its front surface 6' any one thermo-adhesive label representing any one trademark or logo.

The advantage, also in this case, is that of accurately reproducing any trademark or logo on a curved and rigid surface, like that of a bottle for drinks.

The optionally fluorescent material constituting the fabric 6 can be represented by a fabric or by a non-woven fabric. Preferably said fabric 6 is a cloth treated with a weaving that varies from 70 to 100 denier, having trimming with yarns and/or with lamé. Still more preferably, the material constituting the fabric 6 is polyester with a basis weight that varies from 70 g to 100 g.

## Claims

1. Method for applying decorative elements on curved and rigid surfaces such as the neck of a bottle, comprising the steps of:
a) obtaining a template (1) having a plurality of holes (2) having shape and size analogous to those of the plurality of decorative elements (3) adapted to be inserted inside said holes (2), said holes (2) in their entirety being adapted to give rise to any one form, any drawing and/or any writing;
b) inserting a plurality of decorative elements (3) on the surface of said template (1), said decorative elements (3) being adapted to be inserted inside said holes (2) in a manner such to direct their rear surface (3') inside said holes (2);
c) removing the excess decorative elements (3) from the surface of said template (1);
d) applying a film (4), on the surface of the template (1), having an adhesive layer (4') adapted to adhere on said curved surface of said decorative elements (3) so as to receive the decorative elements (3) from the holes (2) of the template (1), said decorative elements (3) adhered on said adhesive layer (4'), maintaining the configuration of said drawing and/or writing present on said template (1) and the application of said adhesive layer (4'), on the surface of the template (1), being executed with precision by means of guide points (5) present on said adhesive layer (4') adapted to mate with corresponding guide points (5') present on the surface of the template (1);
e) removing the film (4) having the adhesive layer (4') from the surface of the template (1), said adhesive layer (4') having, after said removal of the film (4) from the template (1), the exact set of decorative elements (3) forming said drawing and/or writing;
f) applying the adhesive layer (4') on a fabric (6), said fabric (6) having a front surface (6') and a rear surface (6") provided with a double-adhesive layer (11), said application of said decorative elements (3) occurring on the front surface (6') of the fabric (6) guided by a plurality of guide points (8) present on said front surface (6') adapted to mate with a corresponding plurality of guide points (5) present on the adhesive layer (4') of the film (4);
g) removing the film (4) from the front surface (6') of the fabric (6) in order to obtain the transfer of the decorative elements (3) from the adhesive layer (4') to said front surface (6'), said decorative elements (3) being equipped with a glue layer on their rear surface (3') and said rear surface (3') being adapted to be applied on the front surface (6'), said decorative elements (3') forming, after said removal, a decoration (9) present on the front surface (6') of the fabric (6);
h) treating the fabric (6), having the decoration (9) of decorative elements (3), with a thermal press (10);
i) removing the protective film (11"') present on the rear adhesive layer (11") of the double-adhesive layer (11) placed on the rear surface (6") of the fabric (6), said double-adhesive layer (11) having an adhesive layer (11") applied to said rear surface (6") of the fabric (6) upstream of the actuation of the present method for applying decorative elements on curved and rigid surfaces;
j) obtaining a label (12) to be applied on curved and rigid surfaces in a conformation uniformly spread on said rigid and curved surfaces, comprising a fabric (6) having a decoration (9) on its front surface (6') and a double-adhesive layer (11) on its rear surface (6"),
said method being **characterized in that** said label (12) is perfectly and uniformly spread on the surface of a contour bottle to be decorated (100) due to the particular form (7) of said label (12), said form (7) has the shape of a Contour bottle, hence provided with a lower portion (7') and an upper portion (7") connected together by the recesses (13).

2. Method for applying decorative elements according to the preceding claim, **characterized in that** the form (7) of the label (12) has two zones, a lower portion (7') with rectangular form and an upper portion (7") with elliptical form respectively having the larger sides of the rectangle, characterizing said lower portion (7'), and the larger axis of the ellipse characterizing said upper portion (7"), parallel to each other and to the abutment plane of the bottle itself, **in that** said form (7) is symmetric with respect to the vertical symmetry axis (50), **in that** said form (7) has at least two lateral projections (14) shaped as a dovetail and these too are symmetric with respect to said vertical symmetry axis (50) and are placed on the upper portion (7") together with at least one projection (16) which is centrally spread on the greater upper arc (15) of the ellipse.

3. Method for applying decorative elements according to the preceding claims, **characterized in that** the decorative elements (3) are rhinestones.

4. Method for applying decorative elements according to the preceding claims, **characterized in that** said decorative elements (3) are variously colored rhinestones with dimensions that vary between 1 mm and 10 mm and preferably between 2 mm and 6 mm, and **in that** said decorative elements (3) are variously profiled, having various faceting and a variable geometry that is spherical, ellipsoidal, teardrop-shaped, polyhedral and the like.

5. Method for applying decorative elements according to the preceding claims, **characterized in that** the material constituting the fabric (6) is a fabric or non-woven fabric, optionally fluorescent, and preferably it is a cloth treated with a weaving that varies from 70 to 100 denier having trimming with yarns and/or with lamé.

6. Method for applying decorative elements according to the preceding claims, **characterized in that** the material constituting the fabric (6) is polyester with a basis weight that varies from 70 g to 100 g.

7. Method for applying decorative elements according to the preceding claims, **characterized in that** the label (12) is optionally internally hollow, having edges (17) outlining the entire form (7) of said label (12) and having a width that varies from 2 mm to 15 mm on which any decoration (9) is applicable, as in the preceding claims.

8. Method for applying decorative elements according to the preceding claims, **characterized in that** the decorative elements (3) are variously-colored paillettes and/or **in that** the label (12) can optionally comprise a fabric (6) having any thermo-adhesive label on its front surface (6').

9. Label (12) obtained with the method for applying decorative elements according to the preceding claims.

10. Use of a label (12) obtained with the method for applying decorative elements according to the preceding claims for the representation of any decoration (9) on a curved and rigid surface of a contour bottle to be decorated (100), and preferably for the representation of said any decoration (9) on the curved and rigid surface of a contour bottle for containing drinks.

## Patentansprüche

1. Verfahren zum Aufbringen von Zierelementen auf gekrümmte und starre Oberflächen, wie etwa den Hals einer Flasche, umfassend folgende Schritte:
a) Beschaffen einer Schablone (1) mit einer Vielzahl von Löchern (2), die eine Gestalt und Größe analog zu denen der zum Einsetzen in die Löcher (2) angepassten Vielzahl von Zierelementen (3) aufweisen, wobei die Löcher (2) in ihrer Gesamtheit dazu angepasst sind, eine beliebige Gestalt, eine beliebige Zeichnung und/oder einen beliebigen Schriftzug entstehen zu lassen;
b) Einsetzen einer Vielzahl von Zierelementen (3) auf der Oberfläche der Schablone (1), wobei die Zierelemente (3) dazu angepasst sind, auf derartige Weise in die Löcher (2) eingesetzt zu werden, dass ihre hintere Oberfläche (3') in die Löcher (2) gerichtet ist;
c) Entfernen der überschüssigen Zierelemente (3) von der Oberfläche der Schablone (1);
d) Aufbringen einer Folie (4) auf die Oberfläche der Schablone (1), die eine Klebeschicht (4') aufweist, die dazu angepasst ist, an der gekrümmten Oberfläche der Zierelemente (3) zu kleben, um die Zierelemente (3) aus den Löchern (2) der Schablone (1) aufzunehmen, wobei die an der Klebeschicht (4') klebenden Zierelemente (3) die Konfiguration der bzw. des auf der Schablone (1) vorhandenen Zeichnung und/oder Schriftzugs beibehalten, und das Aufbringen der Klebeschicht (4') auf die Oberfläche der Schablone (1) mittels auf der Klebeschicht (4') vorhandenen Führungspunkten (5), die dazu angepasst sind, mit auf der Oberfläche der Schablone (1) vorhandenen entsprechenden Führungspunkten (5') zusammenzupassen, mit Präzision ausgeführt wird;
e) Abziehen der Folie (4) mit der Klebeschicht (4') von der Oberfläche der Schablone (1), wobei die Klebeschicht (4') nach dem Abziehen der Folie (4) von der Schablone (1) den genauen Satz von Zierelementen (3) aufweist, die die Zeichnung und/oder den Schriftzug bilden;
f) Aufbringen der Klebeschicht (4') auf einen Stoff (6), wobei der Stoff (6) eine vordere Oberfläche (6') und eine mit einer Doppelklebeschicht (11) versehene hintere Oberfläche (6") aufweist, wobei das Aufbringen der Zierelemente (3) auf der vorderen Oberfläche (6') des Stoffs (6) geführt von einer Vielzahl von auf der vorderen Oberfläche (6') vorhandenen Führungspunkten (8), die dazu angepasst sind, mit einer entsprechenden Vielzahl von auf der Klebeschicht (4') der Folie (4) vorhandenen Führungspunkten (5) zusammenzupassen, stattfindet;
g) Abziehen der Folie (4) von der vorderen Oberfläche (6') des Stoffs (6), um die Übertragung der Zierelemente (3) von der Klebeschicht (4') auf die vordere Oberfläche (6') zu erhalten, wobei die Zierelemente (3) mit einer Klebstoffschicht auf ihrer hinteren Oberfläche (3') ausgestattet sind und die hintere Oberfläche (3') dazu angepasst ist, auf die vordere Oberfläche (6') aufgebracht zu werden, wobei die Zierelemente (3') nach dem Abziehen eine auf der vorderen Oberfläche (6') des Stoffs (6) vorhandene Verzierung (9) bilden;
h) Behandeln des die Verzierung (9) aus Zierelementen (3) aufweisenden Stoffs (6) mit einer Wärmepresse (10);
i) Abziehen der Schutzfolie (11'"), die auf der hinteren Klebeschicht (11") der auf der hinteren Oberfläche (6") des Stoffs (6) platzierten Doppelklebeschicht (11) vorhanden ist, wobei die Doppelklebeschicht (11) eine Klebeschicht (11") aufweist, die dem Ingangsetzen des vorliegenden Verfahrens zum Aufbringen von Zierelementen auf gekrümmte und starre Oberflächen vorgeschaltet auf die hintere Oberfläche (6") des Stoffs (6) aufgebracht wird;
j) Beschaffen eines Etiketts (12), das in einer gleichmäßig auf die starren und gekrümmten Oberflächen ausgebreiteten Konstellation auf gekrümmte und starre Oberflächen aufzubringen ist, das einen Stoff (6) mit einer Verzierung (9) auf seiner vorderen Oberfläche (6') und einer Doppelklebeschicht (11) auf seiner hinteren Oberfläche (6") umfasst,
wobei das Verfahren **dadurch gekennzeichnet ist, dass** das Etikett (12) aufgrund der speziellen Form (7) des Etiketts (12) perfekt und gleichmäßig auf der Oberfläche einer zu verzierenden Konturflasche (100) ausgebreitet ist, wobei die Form (7) die Gestalt einer Konturflasche aufweist und daher mit einem unteren Abschnitt (7') und einem oberen Abschnitt (7"), die durch die Aussparungen (13) miteinander verbunden sind, versehen ist.

2. Verfahren zum Aufbringen von Zierelementen nach dem vorangehenden Anspruch, **dadurch gekennzeichnet, dass** die Form (7) des Etiketts (12) zwei Zonen aufweist, wobei ein unterer Abschnitt (7') mit rechteckiger Form und ein oberer Abschnitt (7") mit elliptischer Form, wobei die größeren Seiten des Rechtecks den unteren Abschnitt (7') kennzeichnen und die größere Achse der Ellipse den oberen Abschnitt (7") kennzeichnet, jeweils parallel zueinander und zur Anlageebene der Flasche selbst sind, dadurch, dass die Form (7) in Bezug auf die vertikale Symmetrieachse (50) symmetrisch ist, dadurch, dass die Form (7) mindestens zwei als Schwalbenschwanz geformte seitliche Vorsprünge (14) aufweist und diese ebenfalls in Bezug auf die vertikale Symmetrieachse (50) symmetrisch sind und zusammen mit mindestens einem Vorsprung (16), der mittig auf dem größeren oberen Bogen (15) der Ellipse ausgebreitet ist, an dem oberen Abschnitt (7") platziert sind.

3. Verfahren zum Aufbringen von Zierelementen nach den vorangehenden Ansprüchen, **dadurch gekennzeichnet, dass** es sich bei den Zierelementen (3) um Glaskristallsteine handelt.

4. Verfahren zum Aufbringen von Zierelementen nach den vorangehenden Ansprüchen, **dadurch gekennzeichnet, dass** es sich bei den Zierelementen (3) um verschiedenfarbige Glaskristallsteine mit Abmessungen, die zwischen 1 mm und 10 mm und vorzugsweise zwischen 2 mm und 6 mm variieren, handelt, und dadurch, dass die Zierelemente (3) verschieden profiliert sind, wobei sie verschiedene Facettenschliffe und eine variable Geometrie, die kugelförmig, ellipsenförmig, tropfenförmig, vielflächig und dergleichen ist, aufweisen.

5. Verfahren zum Aufbringen von Zierelementen nach den vorangehenden Ansprüchen, **dadurch gekennzeichnet, dass** es sich bei dem den Stoff (6) bildenden Material um ein Gewebe oder Vlies, optional fluoreszierend, handelt und es sich vorzugsweise um ein Tuch handelt, das mit einer Weberei behandelt ist, die von 70 bis 100 Denier variiert und einen Besatz mit Garnen und/oder mit Lamé aufweist.

6. Verfahren zum Aufbringen von Zierelementen nach den vorangehenden Ansprüchen, **dadurch gekennzeichnet, dass** es sich bei dem den Stoff (6) bildenden Material um Polyester mit einem Grundgewicht, das von 70 g bis 100 g variiert, handelt.

7. Verfahren zum Aufbringen von Zierelementen nach den vorangehenden Ansprüchen, **dadurch gekennzeichnet, dass** das Etikett (12) optional innen hohl ist und Ränder (17) aufweist, die die gesamte Form (7) des Etiketts (12) umranden und die eine Breite aufweisen, die von 2 mm bis 15 mm variiert, auf denen jegliche Verzierung (9) aufgebracht werden kann, wie in den vorangehenden Ansprüchen.

8. Verfahren zum Aufbringen von Zierelementen nach den vorangehenden Ansprüchen, **dadurch gekennzeichnet, dass** es sich bei den Zierelementen (3) um verschiedenfarbige Pailletten handelt und/oder dadurch, dass das Etikett (12) optional einen Stoff (6) mit einem beliebigen Thermoklebeetikett auf seiner vorderen Oberfläche (6') umfassen kann.

9. Etikett (12), das mit dem Verfahren zum Aufbringen von Zierelementen nach den vorangehenden Ansprüchen erhalten wird.

10. Verwendung eines mit dem Verfahren zum Aufbringen von Zierelementen nach den vorangehenden Ansprüchen erhaltenen Etiketts (12) zum Darstellen einer beliebigen Verzierung (9) auf einer gekrümmten und starren Oberfläche einer zu verzierenden Konturflasche (100), und vorzugsweise zum Darstellen der beliebigen Verzierung (9) auf der gekrümmten und starren Oberfläche einer Konturflasche zum Enthalten von Getränken.

## Revendications

1. Procédé servant à appliquer des éléments décoratifs sur des surfaces courbes et rigides telles que le goulot d'une bouteille, comportant les étapes consistant à :
a) obtenir un gabarit (1) ayant une pluralité de trous (2) ayant une forme et une taille analogues à celles de la pluralité d'éléments décoratifs (3) adaptés à des fins d'insertion à l'intérieur desdits trous (2), lesdits trous (2) étant dans leur totalité adaptés en vue de donner lieu à une forme quelconque, à un dessin quelconque et/ou à une écriture quelconque ;
b) insérer une pluralité d'éléments décoratifs (3) sur la surface dudit gabarit (1), lesdits éléments décoratifs (3) étant adaptés à des fins d'insertion à l'intérieur desdits trous (2) de manière à diriger leur surface arrière (3') à l'intérieur desdits trous (2) ;
c) retirer les éléments décoratifs (3) en excès en provenance de la surface dudit gabarit (1) ;
d) appliquer un film (4), sur la surface du gabarit (1), ayant une couche d'adhésif (4') adaptée à des fins d'adhésion sur ladite surface courbe desdits éléments décoratifs (3) de manière à recevoir les éléments décoratifs (3) en provenance des trous (2) du gabarit (1), lesdits éléments décoratifs (3) étant adhérés sur ladite couche d'adhésif (4'), tout en maintenant la configuration dudit dessin présent et/ou de ladite écriture présente sur ledit gabarit (1) et l'application de ladite couche d'adhésif (4'), sur la surface du gabarit (1), étant exécutée avec précision au moyen de points de guidage (5) présents sur ladite couche d'adhésif (4') adaptés à des fins d'appariement avec des points de guidage correspondants (5') présents sur la surface du gabarit (1) ;
e) retirer le film (4) ayant la couche d'adhésif (4') en provenance de la surface du gabarit (1), ladite couche d'adhésif (4') ayant, après ledit retrait du film (4) en provenance du gabarit (1), le jeu exact d'éléments décoratifs (3) formant ledit dessin et/ou ladite écriture ;
f) appliquer la couche d'adhésif (4') sur un tissu (6), ledit tissu (6) ayant une surface avant (6') et une surface arrière (6") comportant une double couche d'adhésif (11), ladite application desdits éléments décoratifs (3) se faisant sur la surface avant (6') du tissu (6) guidée par une pluralité de points de guidage (8) présents sur ladite surface avant (6') adaptés à des fins d'appariement avec une pluralité de points de guidage correspondants (5) présents sur la couche d'adhésif (4') du film (4) ;
g) retirer le film (4) en provenance de la surface avant (6') du tissu (6) afin d'obtenir le transfert des éléments décoratifs (3) en provenance de la couche d'adhésif (4') jusque sur ladite surface avant (6'), lesdits éléments décoratifs (3) étant dotés d'une couche de colle sur leur surface arrière (3') et ladite surface arrière (3') étant adaptée à des fins d'application sur la surface avant (6'), lesdits éléments décoratifs (3') formant, après ledit retrait, une décoration (9) présente sur la surface avant (6') du tissu (6) ;
h) traiter le tissu (6), ayant la décoration (9) d'éléments décoratifs (3), au moyen d'une presse thermique (10) ;
i) retirer le film de protection (11"') présent sur la couche d'adhésif arrière (11 ") de la double couche d'adhésif (11) placée sur la surface arrière (6") du tissu (6), ladite double couche d'adhésif (11) ayant une couche d'adhésif (11") appliquée sur ladite surface arrière (6") du tissu (6) en amont de la mise en oeuvre du présent procédé servant à appliquer des éléments décoratifs sur des surfaces courbes et rigides ;
j) obtenir une étiquette (12) devant être appliquée sur des surfaces courbes et rigides en une conformation étalée de manière uniforme sur lesdites surfaces courbes et rigides, comportant un tissu (6) ayant une décoration (9) sur sa surface avant (6') et une double couche d'adhésif (11) sur sa surface arrière (6"),
ledit procédé étant **caractérisé en ce que** ladite étiquette (12) est étalée de manière parfaite et uniforme sur la surface d'une bouteille à contour devant être décorée (100) en raison de la forme particulière (7) de ladite étiquette (12), ladite forme (7) ayant la forme d'une bouteille à contour, d'où la mise en oeuvre d'une partie inférieure (7') et d'une partie supérieure (7") raccordées ensemble par les évidements (13).

2. Procédé servant à appliquer des éléments décoratifs selon la revendication précédente, **caractérisé en ce que** la forme (7) de l'étiquette (12) a deux zones, une partie inférieure (7') ayant une forme rectangulaire et une partie supérieure (7") ayant une forme elliptique ayant respectivement les plus grands côtés du rectangle caractérisant ladite partie inférieure (7'), et le plus grand axe de l'ellipse caractérisant ladite partie supérieure (7"), parallèles l'une par rapport à l'autre et au plan de butée de la bouteille elle-même, **en ce que** ladite forme (7) est symétrique par rapport à l'axe de symétrie vertical (50), **en ce que** ladite forme (7) a au moins deux parties saillantes latérales (14) formées en queue d'aronde et celles-ci sont aussi symétriques par rapport audit axe de symétrie vertical (50) et sont placées sur la partie supérieure (7") avec au moins une partie saillante (16) qui est étalée de manière centrale sur le plus grand arc supérieur (15) de l'ellipse.

3. Procédé servant à appliquer des éléments décoratifs selon les revendications précédentes, **caractérisé en ce que** les éléments décoratifs (3) sont des pierres du Rhin.

4. Procédé servant à appliquer des éléments décoratifs selon les revendications précédentes, **caractérisé en ce que** lesdits éléments décoratifs (3) sont des pierres du Rhin aux couleurs variées ayant des dimensions qui varient entre 1 mm et 10 mm et de préférence entre 2 mm et 6 mm, et **en ce que** lesdits éléments décoratifs (3) sont à profils variés, ayant un facettage varié et une géométrie variable qui est en forme de sphère, d'ellipse, de larme, de polyèdre et analogue.

5. Procédé servant à appliquer des éléments décoratifs selon les revendications précédentes, **caractérisé en ce que** le matériau constituant le tissu (6) est un tissu ou un tissu non tissé, éventuellement fluorescent, et de préférence est un tissu traité au moyen d'un tissage qui varie de 70 à 100 denier à garniture de fils et/ou de lamé.

6. Procédé servant à appliquer des éléments décoratifs selon les revendications précédentes, **caractérisé en ce que** le matériau constituant le tissu (6) est du polyester ayant une masse surfacique qui varie de 70 g à 100 g.

7. Procédé servant à appliquer des éléments décoratifs selon les revendications précédentes, **caractérisé en ce que** l'étiquette (12) est éventuellement creuse à l'intérieur, ayant des bords (17) encadrant toute la forme (7) de ladite étiquette (12) et ayant une largeur qui varie de 2 mm à 15 mm sur laquelle toute décoration (9) est en mesure d'être appliquée, comme selon les revendications précédentes.

8. Procédé servant à appliquer des éléments décoratifs selon les revendications précédentes, **caractérisé en ce que** les éléments décoratifs (3) sont des paillettes à couleurs variées et/ou **en ce que** l'étiquette (12) peut éventuellement comporter un tissu (6) ayant une étiquette thermocollante sur sa surface avant (6').

9. Étiquette (12) obtenue au moyen du procédé servant à appliquer des éléments décoratifs selon les revendications précédentes.

10. Utilisation d'une étiquette (12) obtenue au moyen du procédé servant à appliquer des éléments décoratifs selon les revendications précédentes pour la représentation de toute décoration (9) sur une surface courbe et rigide d'une bouteille à contour devant être décorée (100), et de préférence pour la représentation de ladite décoration quelconque (9) sur ladite surface courbe et rigide d'une bouteille à contour servant à contenir des boissons.
